# EUROPEAN PATENT APPLICATION

(11) **EP 4 795 987 A2**
(43) Date of publication of application: **26.08.2026**
(21) Application number: 25227305.7
(22) Date of filing: 26.12.2025
(51) Int. Cl.: A47J 37/06, A47J 37/12

(54) **COOKING DEVICE, CONTROL METHOD, AND STORAGE MEDIUM**

(30) Priority: 31.12.2024 CN 202411999587; 31.12.2024 CN 202423322678 U
(71) Applicant: Shenzhen Typhur Technology Co., Ltd, Shenzhen, Guangdong 518067 (CN)
(72) Inventor: WEI, Xiang, Nanshan District, Shenzhen City, Guangdong, 518067 (CN); CHEN, Xuchao, Futian District, Shenzhen City, Guangdong, 518048 (CN); WANG, Yinqi, Nanshan District, Shenzhen City, Guangdong, 518067 (CN); CHEN, Jingfan, Nanshan District, Shenzhen City, Guangdong, 518067 (CN)
(74) Representative: KIPA AB

(57) **Abstract**

An air fryer and a cooking device, comprising a housing and a cooking pot body, the housing is configured to enclose and form a cooking cavity, and the cooking pot body is configured to carry food, the cooking pot body divides the cooking cavity into a first cooking area and a second cooking area; a first heating unit configured to heat the first cooking area to heat the food on the cooking pot body from the first cooking area; a second heating unit configured to heat the food on the cooking pot body from the second cooking area; a first driving circuit configured to drive the first heating unit to be in an on state or in an off state; a second driving circuit configured to drive the second heating unit to be in an on state or in an off state.

## Description

### Technical Field

The present application relates to the technical field of cooking appliances, and in particular to a cooking device, a control method, and a storage medium.

### Background Art

Cooking devices are used to cook food by heating the food. For example, a cooking device is usually equipped with a heating unit, and the food is heated by the heating unit to achieve cooking.

In cooking devices, due to power limitations of the device, usually only one heating unit is configured therein. However, one heating unit is usually difficult to complete the cooking of food well. For example, it is necessary to turn over the heated food and heat it again to complete the cooking of the food. This is not only troublesome to operate, but also difficult to control the cooking conditions on both sides of the food. If multiple heating units are used, the power limit of the device will be exceeded, so it cannot meet the user's food cooking needs. In this regard, new technical solutions need to be proposed.

### Summary of the Invention

The main technical problem solved by the present application is that it cannot meet the user's food cooking needs.

According to a first aspect, an embodiment provides a cooking device, comprising:
a cooking body, having a first cooking area and a second cooking area, the first cooking area and the second cooking area being different;
a first heating unit, defined in the first cooking area;
a second heating unit, defined in the second cooking area;
a control unit, configured to:
   determine a priority relationship between the first heating unit and the second heating unit;
   obtain respective preset conditions for turning on and turning off the first heating unit and the second heating unit, to independently control the turning on and turning off of the first heating unit and the second heating unit, respectively;
   control a high-priority heating unit to perform heating and stop heating of a low-priority heating unit, when a preset condition corresponding to turning on a high-priority heating unit is satisfied; and control the high-priority heating unit to stop heating to complete one heating cycle of the high-priority heating unit and enter a non-heating cycle of the high-priority heating unit, when a preset condition corresponding to turning off the high-priority heating unit is satisfied; the high-priority heating unit is the first heating unit and the low-priority heating unit is the second heating unit, or the high-priority heating unit is the second heating unit and the low-priority heating unit is the first heating unit; and
   control the low-priority heating unit to perform heating, during the non-heating cycle and when a preset condition corresponding to turning on the low-priority heating unit is satisfied; and control the low-priority heating unit to stop heating, when a preset condition corresponding to turning off the low-priority heating unit is satisfied.

In some embodiments, the control unit is configured to control the high-priority heating unit to complete at least two of the heating cycles.

In some embodiments, obtain a first preset condition for turning on the first heating unit and a second preset condition for turning off, and obtain a third preset condition for turning on the second heating unit and a fourth preset condition for turning off; the first preset condition is different from the fourth preset condition; and/or the second preset condition is different from the third preset condition.

In some embodiments, the first preset condition, the second preset condition, the third preset condition, and the fourth preset condition respectively comprise time-related parameters of respective corresponding heating units and/or temperature-related parameters of respective corresponding cooking areas.

In some embodiments, the control unit is capable of controlling the first heating unit to perform heating at a first power, and capable of controlling the second heating unit to perform heating at a second power, a total power of the first power and the second power is greater than a preset limit power.

In some embodiments, the cooking device further comprises:
a first driving unit, configured to drive the first heating unit to turn on or off based on control of the control unit;
a second driving unit, configured to drive the second heating unit to turn on or off based on control of the control unit.

According to a second aspect, an embodiment provides a cooking device, comprising:
a cooking body, having a first cooking area and a second cooking area, the first cooking area and the second cooking area being different;
a first heating unit, defined in the first cooking area;
a second heating unit, defined in the second cooking area;
a control unit, configured to:
   determine a priority relationship between the first heating unit and the second heating unit;
   obtain a first preset condition for turning on the first heating unit, and obtain a third preset condition for turning on the second heating unit;
   control the first heating unit to perform heating and control the second heating unit to stop heating, when one of the first preset condition and the third preset condition is satisfied, if the one is for the first heating unit; or control the second heating unit to perform heating and control the first heating unit to stop heating, if the one is for the second heating unit; and
   control a high-priority heating unit to perform heating and control a low-priority heating unit to stop heating, when the first preset condition and the third preset condition are satisfied simultaneously; the high-priority heating unit is the first heating unit and the low-priority heating unit is the second heating unit, or the high-priority heating unit is the second heating unit and the low-priority heating unit is the first heating unit.

According to a third aspect, an embodiment provides a control method for a cooking device, comprising:
determining a priority relationship between a first heating unit and a second heating unit;
obtaining respective preset conditions for turning on and turning off the first heating unit and the second heating unit, to independently control the turning on and turning off of the first heating unit and the second heating unit, respectively;
control the high-priority heating unit to perform heating and stop heating of a low-priority heating unit, when a preset condition corresponding to turning on a high-priority heating unit is satisfied; and control the high-priority heating unit to stop heating to complete one heating cycle of the high-priority heating unit and enter a non-heating cycle of the high-priority heating unit, when a preset condition corresponding to turning off the high-priority heating unit is satisfied; the high-priority heating unit is the first heating unit and the low-priority heating unit is the second heating unit, or the high-priority heating unit is the second heating unit and the low-priority heating unit is the first heating unit; and
control the low-priority heating unit to perform heating, during the non-heating cycle and when a preset condition corresponding to turning on the low-priority heating unit is satisfied, and control the low-priority heating unit to stop heating, when a preset condition corresponding to turning off the low-priority heating unit is satisfied.

According to a fourth aspect, an embodiment provides a control method for a cooking device, comprising:
determining a priority relationship between a first heating unit and a second heating unit;
obtaining a first preset condition for turning on the first heating unit, and obtaining a third preset condition for turning on the second heating unit;
control the first heating unit to perform heating and control the second heating unit to stop heating, when one of the first preset condition and the third preset condition is satisfied, if the one is for the first heating unit; or control the second heating unit to perform heating and control the first heating unit to stop heating, if the one is for the second heating unit; and
control a high-priority heating unit to perform heating and control a low-priority heating unit to stop heating, when the first preset condition and the third preset condition are satisfied simultaneously; the high-priority heating unit is the first heating unit and the low-priority heating unit is the second heating unit, or the high-priority heating unit is the second heating unit and the low-priority heating unit is the first heating unit.

According to a fifth aspect, an embodiment provides a computer-readable storage medium, a program is stored on the medium, and the program can be executed by a processor to implement the method according to the third aspect or the fourth aspect.

According to the cooking device, control method, and storage medium of the above embodiments, there is a different priority between the two heating units, and there are respective preset conditions for turning on and turning off between the two heating units, to independently control the turning on and turning off of the two heating units, respectively. When the turning-on condition of the high-priority heating unit is satisfied, the high-priority heating unit is turned on and the low-priority heating unit is turned off, and when the turning-off condition of the high-priority heating unit is satisfied, the high-priority heating unit is turned off. If during the period when the high-priority heating unit is turned off, the turning-on condition of the low-priority heating unit is satisfied, the low-priority heating unit is turned on, and when the turning-off condition of the low-priority heating unit is satisfied, the low-priority heating unit is turned off. Since only one heating unit can be turned on at a time, the power limit of the device will not be exceeded, and the two heating units are independently controlled, and the high-priority heating unit is turned on preferentially, so that the heating of the food by the high-priority heating unit is satisfied first, and then the heating of the food by the low-priority heating unit is satisfied, thereby accurately meeting the user's food cooking needs based on the two heating units.

### Brief Description of the Drawings

FIG. 1 is a schematic structural diagram of a cooking device according to an embodiment;
FIG. 2 is a schematic structural diagram of a cooking device according to another embodiment;
FIG. 3 is a schematic structural diagram of a cooking device according to yet another embodiment;
FIG. 4 is a schematic structural diagram of a first driving unit and a second driving unit according to an embodiment;
FIG. 5 is a schematic flowchart of a control method for a cooking device according to an embodiment;
FIG. 6 is a schematic flowchart of a control method for a cooking device according to yet another embodiment.

### Detailed Description

The present application will be further described in detail below through specific embodiments in conjunction with the accompanying drawings. Similar elements in different embodiments are labeled with associated similar element numbers. In the following embodiments, many detailed descriptions are provided to enable the present application to be better understood. However, those skilled in the art can easily recognize that some features can be omitted in different situations, or can be replaced by other elements, materials, or methods. In some cases, some operations related to the present application are not shown or described in the specification, which is to avoid overwhelming the core part of the present application with excessive descriptions. For those skilled in the art, it is not necessary to describe these related operations in detail, and they can fully understand the related operations based on the description in the specification and the general technical knowledge in the art.

In addition, the features, operations, or characteristics described in the specification can be combined in any appropriate manner to form various embodiments. At the same time, the steps or actions in the method description can also be exchanged or adjusted in sequence in a manner that is obvious to those skilled in the art. Therefore, the various sequences in the specification and drawings are only for clearly describing a certain embodiment and do not mean that they are necessary sequences, unless otherwise specified that a certain sequence must be followed.

The numbering of components in this article, such as "first", "second", etc., is only used to distinguish the described objects and does not have any sequential or technical meaning. The "connection" and "coupling" mentioned in the present application, unless otherwise specified, comprise both direct and indirect connection (coupling).

When a cooking device is equipped with multiple heating units, for example, when equipped with two heating units, in order not to exceed the power limit of the device, one heating unit has a higher heating power and the other has a lower heating power, and then the two heating units heat at the same time. However, this will cause the heating temperature of the heating unit with higher heating power to be not high enough, and the heating temperature of the heating unit with lower heating power to be too low, which still cannot meet the user's needs for precise cooking of food.

In some embodiments of the present application, the cooking device is equipped with two heating units, there is a different priority between the two heating units, and there are respective preset conditions for turning on and turning off between the two heating units, to independently control the turning on and turning off of the two heating units, respectively. Whenever the turning-on condition of the high-priority heating unit is satisfied, only the high-priority heating unit can be turned on, and when the turning-off condition of the high-priority heating unit is satisfied, the high-priority heating unit is turned off. If during the period when the high-priority heating unit is turned off, the turning-on condition of the low-priority heating unit is also satisfied, then the low-priority heating unit is turned on. Since only one heating unit can be turned on at a time, the power limit of the device will not be exceeded, and the two heating units are independently controlled, and the high-priority heating unit is turned on preferentially, so that the heating of the food by the high-priority heating unit is satisfied first, and then the heating of the food by the low-priority heating unit is satisfied, thereby accurately meeting the user's food cooking needs based on the two heating units.

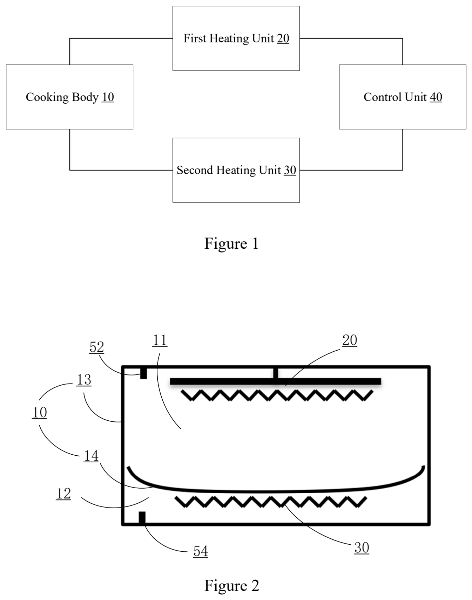

Some embodiments provide a cooking device, which can control two heating units to independently heat and cook food, and preferentially satisfy one of the heating units to heat and cook the food, to meet the user's food cooking needs. Referring to FIG. 1, the cooking device comprises a cooking body 10, a first heating unit 20, a second heating unit 30, and a control unit 40, which will be specifically described below.

The cooking body 10 is used to accommodate food to provide a space for cooking the food.

Referring to FIG. 2, in some embodiments, the cooking body 10 has a first cooking area 11 and a second cooking area 12, and the first cooking area 11 and the second cooking area 12 are different. In some embodiments, the first cooking area 11 and the second cooking area 12 can be used to place food to be cooked respectively, to cook different foods separately. For example, the first cooking area 11 and the second cooking area 12 can be two independent areas, and the two independent areas can be two independent heating cavities respectively, or one can be a heating cavity and the other can be a heating pot or a heating plate. In some embodiments, the first cooking area 11 and the second cooking area 12 can also be used to cook the same food to be cooked, for example, obtained by dividing the same area, such as dividing a heating cavity into an upper first cooking area 11 and a lower second cooking area 12, the first cooking area 11 is used to cook the upper side of the food, and the second cooking area 12 is used to cook the lower side of the food. Alternatively, a heating cavity can also be divided into a left part or a right part, and the specific division method is not limited.

Referring to FIG. 2, in some embodiments, the cooking body 10 comprises a housing 13 and a cooking pot body 14. the housing 13 is used to enclose and form a cooking cavity. The cooking pot body 14 is defined in the cooking cavity and divides the cooking cavity into a first cooking area 11 located on one side of the cooking pot body 14 and a second cooking area 12 located on the other side of the cooking pot body 14. For example, the first cooking area 11 is located above the cooking pot body 14, the second cooking area 12 is located below the cooking pot body 14, and food can be placed on the upper surface of the cooking pot body 14. In some embodiments, the cooking pot body 14 has a handle (not shown) for the cooking pot body 14 to be drawably defined in the cooking cavity, for example, drawing the cooking pot body 14 out of the cooking cavity, placing food on the cooking pot body 14, and then pushing the cooking pot body 14 into the cooking cavity. In some embodiments, it can be understood that when the cooking body 10 of the air fryer does not comprise the above-mentioned housing 13 and cooking pot body 14, the air fryer can serve as other cooking devices at this time. For example, the first cooking area 11 and the second cooking area 12 can be two independent areas separated by heat-insulating material. For example, the cooking body 10 comprises the housing 13 and the cooking pot body 14, but the cooking pot body 14 does not have a handle.

Referring to FIGS. 1 and 2, the first heating unit 20 is defined in the first cooking area 11 for heating the first cooking area 11, and the second heating unit 30 is defined in the second cooking area 12 for heating the second cooking area 12. The first heating unit 20 and the second heating unit 30 can use the same heating method or different heating methods, and can also select one or more suitable heating methods according to different cooking areas.

In some embodiments, the heating method can use electrical energy provided by an external power supply or an internal power supply to generate heat to heat the cooking area. For example, electrical energy can be used to heat a heating element made of nickel-chromium-iron alloy wire, so that the cooking area can be directly heated by far-infrared rays generated by the heated heating element. For example, electrical energy can be used to form a magnetic field in a coil, so that the cooking area magnetized by the formed magnetic field can be heated. For example, electrical energy can be used to heat an electric heating wire, so that the heated electric heating wire directly heats the cooking pot body 14 formed of a heat-conducting material through heat conduction or indirectly heats the cooking pot body 14, thereby heating the food on the cooking pot body 14. For example, electrical energy can be used to heat an electric heating wire, so that the heated electric heating wire heats air, and the heated air heats the cooking area through convection.

In some embodiments, the first heating unit 20 has a power input terminal, and the first heating unit 20 is in an on state when its power input terminal is connected to power to heat the first cooking area11, and the first heating unit 20 is in an off state when its power input terminal is disconnected from power to stop heating the first cooking area 11. In some embodiments, the second heating unit 30 has a power input terminal, and the second heating unit 30 is in an on state when its power input terminal is connected to power to heat the second cooking area 12, and the second heating unit 30 is in an off state when its power input terminal is disconnected from power to stop heating the second cooking area 12. In some embodiments, the first heating unit 20 heats the first cooking area 11 to heat the food on the cooking pot body 14 from the first cooking area 11, and the second heating unit 30 heats the second cooking area 12 to heat the food on the cooking pot body 14 from the second cooking area 12. In some embodiments, the second heating unit 12 can also be defined in the cooking pot body 14 to directly heat the food on the cooking pot body 14.

In some embodiments, the first heating unit 20 comprises a fan member and a first heating member, the first heating member is used to generate heat, and the fan member is used to drive airflow to form hot air to heat the first cooking area 11. In some embodiments, the second heating unit 30 comprises a second heating member, and the second heating member is used to generate heat to heat the second cooking area 12. For example, when the first heating unit 20 is connected to power, the first heating member starts to generate heat, and the fan member starts to drive airflow, thereby cooking the upper side of the food. For example, the second heating member starts to generate heat, thereby cooking the lower side of the food.

The first driving circuit is used to drive the first heating unit 20 to perform heating, and the second driving circuit is used to drive the second heating unit 30 to perform heating.

In some embodiments, the first driving circuit has a control terminal, a power terminal, and a driving terminal, the power terminal of the first driving circuit is used to connect to power, the driving terminal of the first driving circuit is connected to the power input terminal of the first heating unit 20, the first driving circuit is in a conduction state when a first conduction signal is input to its control terminal, so that its power terminal and driving terminal are conducted to drive the first heating unit 20 to be in an on state, and the first driving circuit is in a cut-off state when a first cut-off signal is input to its control terminal, so that its power terminal and driving terminal are disconnected to drive the first heating unit 20 to be in an off state.

In some embodiments, the second driving circuit has a control terminal, a power terminal, and a driving terminal, the power terminal of the second driving circuit is used to connect to power, the driving terminal of the second driving circuit is connected to the power input terminal of the second heating unit 30, the second driving circuit is in a conduction state when a second conduction signal is input to its control terminal, so that its power terminal and driving terminal are conducted to drive the second heating unit 30 to be in an on state, and the second driving circuit is in a cut-off state when a second cut-off signal is input to its control terminal, so that its power terminal and driving terminal are disconnected to drive the second heating unit 30 to be in an off state. The first conduction signal, the first cut-off signal, the second conduction signal, and the second cut-off signal can be output by the controll unit 40.

The control unit 40 is used to control the first heating unit 20 and the second heating unit 30 to perform heating. In some embodiments, the control unit 40 can be implemented based on devices with control functions such as CPU, FPGA, single-chip microcomputer, etc.

In some embodiments, the first heating unit 20 and the second heating unit 30 have respective preset conditions for turning on and turning off, and the control unit 40 obtains the respective preset conditions for turning on and turning off of the first heating unit 20 and the second heating unit 30, respectively, to independently control the turning on and turning off of the first heating unit 20 and the second heating unit 30, respectively.

In some embodiments, the first heating unit 20 has a first preset condition for turning on and a second preset condition for turning off, and the second heating unit 30 has a third preset condition for turning on and a fourth preset condition for turning off. In some embodiments, the first preset condition is different from the fourth preset condition. In some embodiments, the second preset condition is different from the third preset condition. In this embodiment, the turning on and turning off between the first heating unit 20 and the second heating unit 30 are independent. For example, when the second preset condition is satisfied, the processing unit controls the first heating unit 20 to turn off. If the third preset condition is not satisfied at this time, the processing unit will not control the second heating unit 30 to turn on, so that both the first heating unit 20 and the second heating unit 30 are in the off state.

In some embodiments, the preset conditions are time-related parameters of the respective corresponding heating units and/or temperature-related parameters of the respective corresponding cooking areas. For example, the first preset condition, the second preset condition, the third preset condition, and the fourth preset condition respectively comprise time-related parameters of the respective corresponding heating units and/or temperature-related parameters of the respective corresponding cooking areas.

The time-related parameters comprise at least one of a heating time of the corresponding heating unit and a turn-on time difference between the corresponding heating unit and another heating unit. The temperature-related parameters comprise at least one of a target temperature of the corresponding cooking area, a heating or cooling rate of the corresponding cooking area, a temperature difference between a real-time temperature and an initial temperature or target temperature of the corresponding cooking area, and a temperature difference between the corresponding cooking area and another cooking area. For example, the first preset condition can be the heating time of the first heating unit 20 or the turn-on time difference between the first heating unit 20 and the second heating unit 30. For example, the first preset condition can be one or more of the target temperature of the first cooking area 11, the heating or cooling rate of the first cooking area 11, the temperature difference between the real-time temperature and the initial temperature of the first cooking area 11, the temperature difference between the real-time temperature and the target temperature of the first cooking area 11, and the temperature difference between the first cooking area 11 and the second cooking area 12.

For example, the first preset condition is that the temperature of the first cooking area 11 is less than a first threshold temperature, the second preset condition is that the temperature of the first cooking area 11 is greater than a second threshold temperature, the third preset condition is that the temperature of the second cooking area 12 is less than a third threshold temperature, and the fourth preset condition is that the temperature of the second cooking area 12 is greater than a fourth threshold temperature. the first threshold temperature and the second threshold temperature can be the same, or the second threshold temperature can be greater than the first threshold temperature or different. The third threshold temperature and the fourth threshold temperature can be the same, or the fourth threshold temperature can be greater than the second threshold temperature or different. For example, the first preset condition, the second preset condition, the third preset condition, and the fourth preset condition can also comprise time-related parameters. It can be understood that multiple time-related parameters can be combined to obtain preset conditions, multiple temperature-related parameters can be combined to obtain preset conditions, and one or more time-related parameters and one or more temperature-related parameters can also be combined to obtain preset conditions, which will not be repeated here.

In the above embodiments, the first heating unit 20 and the second heating unit 30 have independent on-off conditions and do not affect each other, so as to ensure that when the first cooking area 11 and the second cooking area 12 are heated based on the first heating unit 20 and the second heating unit 30 respectively, the first cooking area 11 and the second cooking area 12 can be accurately in the expected cooking conditions.

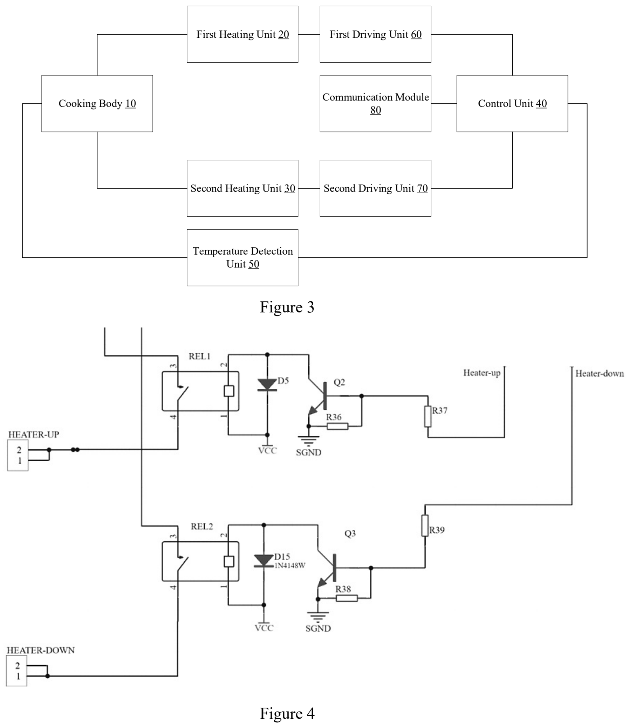

Referring to FIG. 3, in some embodiments, the cooking device further comprises a temperature detection unit 50. The temperature detection unit 50 is used to obtain one or both of the temperature of the first cooking area 11 and the temperature of the second cooking area 12, and output a corresponding temperature signal to the control unit 40. In some embodiments, the temperature detection unit 50 comprises one or more temperature sensing modules. For example, when the temperature detection unit 50 comprises one temperature sensing module, it can be configured in the first cooking area 11 or in the second cooking area 12. For example, when the temperature sensing module is configured in the first cooking area 11, it can directly obtain the temperature of the first cooking area 11 and output a corresponding first cooking area temperature signal to the control unit 40, and then the control unit 40 estimates the temperature of the second cooking area 12 from the temperature of the first cooking area 11 based on the temperature correspondence between the first cooking area 11 and the second cooking area 12. Similarly, when the temperature sensing module is configured in the second cooking area 12, the temperatures of the first cooking area 11 and the second cooking area 12 can also be calculated separately. The temperature correspondence between the first cooking area 11 and the second cooking area 12 can be obtained based on experience or estimated based on positional relationship.

Referring to FIG. 2, in some embodiments, the temperature detection unit 50 comprises a first temperature sensing module 52 and a second temperature sensing module 54. the first temperature sensing module 52 is configured in the first cooking area 11 to obtain the temperature of the first cooking area 11 and output a corresponding first cooking area temperature signal to the control unit 40. The second temperature sensing module 54 is configured in the second cooking area 12 to obtain the temperature of the second cooking area 12 and output a corresponding second cooking area temperature signal to the control unit 40. In some embodiments, the temperature sensing module can perform temperature measurement based on an NTC thermistor or a PTC thermistor.

In some embodiments, a first cooking area temperature signal comprises a first cooking area temperature signal when the temperature of the first cooking area 11 is less than a first threshold temperature, and comprises a second temperature signal when the temperature of the first cooking area 11 is greater than a second threshold temperature, the first temperature signal is used to generate a first conduction signal, and the second temperature signal is used to generate a first cut-off signal. For example, when the controller obtains the first temperature signal, it outputs the first conduction signal to the first driving circuit, and when it obtains the second temperature signal, it outputs the first cut-off signal to the first driving circuit.

In some embodiments, the second cooking area temperature signal comprises a third temperature signal when the temperature of the second cooking area 12 is less than a third threshold temperature, and comprises a fourth temperature signal when the temperature of the second cooking area 12 is greater than a fourth threshold temperature, the third temperature signal is used to generate a second conduction signal, and the fourth temperature signal is used to generate a second cut-off signal. For example, when the controller obtains the third temperature signal, it outputs the second conduction signal to the second driving circuit, and when it obtains the fourth temperature signal, it outputs the second cut-off signal to the second driving circuit.

In some embodiments, the first threshold temperature is the same as or different from the second threshold temperature. In some embodiments, the second threshold temperature is the same as or different from the third threshold temperature. In some embodiments, the first threshold temperature is different from the third threshold temperature. In some embodiments, the second threshold temperature is different from the fourth threshold temperature.

In the above embodiments, the first heating unit 20 and the second heating unit 30 have independent on-off conditions and do not affect each other, so as to ensure that when the first cooking area 11 and the second cooking area 12 are heated based on the first heating unit 20 and the second heating unit 30 respectively, the first cooking area 11 and the second cooking area 12 can be accurately in the expected cooking conditions.

Referring to FIG. 3, in some embodiments, the cooking device further comprises a first driving unit 60 and a second driving unit 70. The first driving unit 60 is used to drive the first heating unit 20 to turn on or off based on the control of the control unit 40, and the second driving unit 70 is used to drive the second heating unit 30 to turn on or off based on the control of the control unit 40.

Referring to FIG. 4, in some embodiments, the first driving circuit comprises a first switching transistor Q2 and a first relay REL1. the first switching transistor Q2 has a first pole, a second pole, and a control pole, and the first relay REL1 has a contact side (pins 1 and 2 of REL1) and a coil side (pins 3 and 4 of REL1). The first pole of the first switching transistor Q2 is grounded, the control pole of the first switching transistor Q2 is used to input a first conduction signal or a first cut-off signal (Heater_Up) output by the control unit 40, the second pole of the first switching transistor Q2 is connected in series with the coil side of the first relay REL1, one end of the contact side of the first relay REL1 (pin 4 of REL1) is used to connect to the first heating unit 20 (HEATER_UP), and the other end of the contact side of the first relay REL1 (pin 3 of REL1) is used to connect to a power supply.

In some embodiments, the second driving circuit comprises a second switching transistor Q3 and a second relay REL2. the second switching transistor Q3 has a first pole, a second pole, and a control pole, the second relay REL2 has a contact side (pins 1 and 2 of REL2) and a coil side (pins 3 and 4 of REL2), the first pole of the second switching transistor Q3 is grounded, the control pole of the second switching transistor Q3 is used to input a second conduction signal or a second cut-off signal (Heater_down) output by the control unit 40, the second pole of the second switching transistor Q3 is connected in series with the coil side of the second relay REL2, one end of the contact side of the second relay REL2 (pin 4 of REL2) is used to connect to the second heating unit 30 (HEATER_DOWN), and the other end of the contact side of the second relay REL2 (pin 3 of REL2) is used to connect to a power supply.

The first switching transistor Q2 and the second switching transistor Q3 can be implemented based on transistors such as triodes or field-effect transistors, and the first conduction signal and the second conduction signal can be high-level signals, and the first cut-off signal and the second cut-off signal can be low-level signals. When the control unit 40 outputs the first conduction signal, the first switching transistor Q2 is turned on, so that the coil side of the first relay REL1 is energized, thereby the contact side of the first relay REL1 is closed, and the first heating unit 20 is connected to the power supply to achieve turning on. Conversely, when the control unit 40 outputs the first cut-off signal, the first switching transistor Q2 is cut off, so that the coil side of the first relay REL1 is de-energized, thereby the contact side of the first relay REL1 is opened, and the first heating unit 20 is disconnected from the power supply to achieve turning off. When the control unit 40 outputs the second conduction signal, the second switching transistor Q3 is turned on, so that the coil side of the second relay REL2 is energized, thereby the contact side of the second relay REL2 is closed, and the second heating unit 30 is connected to the power supply to achieve turning on. Conversely, when the control unit 40 outputs the second cut-off signal, the second switching transistor Q3 is cut off, so that the coil side of the second relay REL2 is de-energized, thereby the contact side of the second relay REL2 is opened, and the second heating unit 30 is disconnected from the power supply to achieve turning off.

In the above embodiments, based on the first driving unit 60 and the second driving unit 70, independent driving of the first heating unit 20 and the second heating unit 30 in circuit structure can be achieved without affecting each other, so as to ensure accurate control and driving of the first heating unit 20 and the second heating unit 30.

In some embodiments, the cooking device further comprises a communication module 80, and the communication module 80 is used to communicate with a user terminal to perform data transmission with the user terminal, for example, to receive control instructions issued by the user terminal, or to receive configuration instructions to configure the preset conditions for turning on and turning off of the first heating unit 20 and the second heating unit 30. For example, upload corresponding cooking data to the user terminal, such as uploading information such as cooking temperature and cooking time. the communication module 80 can comprise a wired communication module, such as a USB communication module, or a wireless communication module, such as a Bluetooth communication module, a WIFI communication module, etc.

In some embodiments, the cooking device has a rated electrical power, i.e., a preset limit power, and at this time, the control unit 40 is capable of controlling the first heating unit 20 to perform heating at a first power, and capable of controlling the second heating unit 30 to perform heating at a second power, the total power of the first power and the second power is greater than the preset limit power. the first power can be the maximum power of the first heating unit 20, and the second power can be the maximum power of the second heating unit 30, both of which are less than or equal to the preset limit power.

The above is some description of the cooking device, and the cooking process of the cooking device will be specifically described below.

The processing unit first determines the priority relationship between the first heating unit 20 and the second heating unit 30. the priority relationship can be default, for example, the priority of the first heating unit 20 is higher than that of the second heating unit 30 by default. It can also be set by the user, for example, the user configures the priority relationship between the first heating unit 20 and the second heating unit 30 based on the control panel of the cooking device or based on the user terminal.

The processing unit obtains the respective preset conditions for turning on and turning off of the first heating unit 20 and the second heating unit 30, which can also be set by the user or default.

When the processing unit determines that the preset condition corresponding to turning on the high-priority heating unit is satisfied, it controls the high-priority heating unit to perform heating, and stops heating of the low-priority heating unit, and when the preset condition corresponding to turning off the high-priority heating unit is satisfied, it controls the high-priority heating unit to stop heating, to complete one heating cycle of the high-priority heating unit and enter the non-heating cycle of the high-priority heating unit.

In this embodiment, when the high-priority heating unit is the first heating unit 20, the low-priority heating unit is the second heating unit 30. When the high-priority heating unit is the second heating unit 30, the low-priority heating unit is the first heating unit 20. In this embodiment, one heating cycle is the time period from the current start of heating to the stop of heating of the high-priority heating unit, and the non-heating cycle is the time period from the current stop of heating to the next restart of heating of the high-priority heating unit.

During the non-heating cycle, and when the processing unit determines that the preset condition corresponding to turning on the low-priority heating unit is satisfied, it controls the low-priority heating unit to perform heating, and when the preset condition corresponding to turning off the low-priority heating unit is satisfied, it controls the low-priority heating unit to stop heating.

In some embodiments, the control unit 40 is used to control the high-priority heating unit to complete at least two heating cycles. For example, when the high-priority heating unit is in the heating cycle, its corresponding cooking area may maintain a certain time in a preset cooking temperature range. At this time, it is not necessary to keep the high-priority heating unit on, so it is turned off and enters the non-heating cycle. When the corresponding cooking area cannot meet the cooking conditions, the high-priority heating unit needs to re-enter the heating cycle, so that the high-priority heating unit completes at least two heating cycles to meet the food cooking needs.

In the above embodiments, the low-priority heating unit is turned on only when the high-priority heating unit does not need to perform heating and the low-priority heating unit needs to perform heating, thereby preferentially satisfying the heating of the food by the high-priority heating unit.

In the above embodiments, the first heating unit 20 and the second heating unit 30 are independent in circuit structure and on-off conditions, so that the first heating unit 20 and the second heating unit 30 can be controlled to heat the food with precise cooking conditions respectively, thereby meeting the user's food cooking needs.

The above is some description of the cooking device.

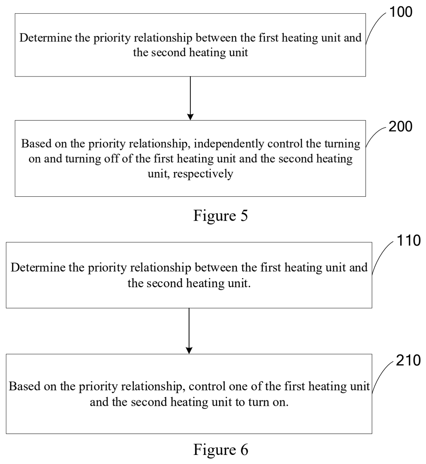

Some embodiments provide a control method for a cooking device, which can be applied to the above cooking device. Referring to FIG. 5, the control method for the cooking device comprises the following steps:
Step 100: Determine the priority relationship between the first heating unit and the second heating unit.

Step 200: Based on the priority relationship, independently control the turning on and turning off of the first heating unit and the second heating unit, respectively. Obtain the respective preset conditions for turning on and turning off of the first heating unit 20 and the second heating unit 30, to independently control the turning on and turning off of the first heating unit 20 and the second heating unit 30, respectively; when the preset condition corresponding to turning on the high-priority heating unit is satisfied, control the high-priority heating unit to perform heating, and stop heating of the low-priority heating unit, and when the preset condition corresponding to turning off the high-priority heating unit is satisfied, control the high-priority heating unit to stop heating, to complete one heating cycle of the high-priority heating unit and enter the non-heating cycle of the high-priority heating unit; the high-priority heating unit is the first heating unit 20, and the low-priority heating unit is the second heating unit 30; or the high-priority heating unit is the second heating unit 30, and the low-priority heating unit is the first heating unit 20; during the non-heating cycle, and when the preset condition corresponding to turning on the low-priority heating unit is satisfied, control the low-priority heating unit to perform heating, and when the preset condition corresponding to turning off the low-priority heating unit is satisfied, control the low-priority heating unit to stop heating.

Some embodiments provide a control method for a cooking device, which can be applied to the above cooking device. Referring to FIG. 6, the control method for the cooking device comprises the following steps:
Step 110: Determine the priority relationship between the first heating unit and the second heating unit.

Step 210: Based on the priority relationship, control one of the first heating unit and the second heating unit to turn on. Obtain the first preset condition for turning on the first heating unit 20, and obtain the third preset condition for turning on the second heating unit 30; when one of the first preset condition and the third preset condition is satisfied, if the one is for the first heating unit 20, control the first heating unit 20 to perform heating and control the second heating unit 30 to stop heating; or if the one is for the second heating unit 30, control the second heating unit 30 to perform heating and control the first heating unit 20 to stop heating; when the first preset condition and the third preset condition are satisfied simultaneously, control the high-priority heating unit to perform heating and control the low-priority heating unit to stop heating; the high-priority heating unit is the first heating unit 20, and the low-priority heating unit is the second heating unit 30; or the high-priority heating unit is the second heating unit 30, and the low-priority heating unit is the first heating unit 20.

Some embodiments provide a computer-readable storage medium, on which a program is stored, and the program can be executed by a processor to implement the control method for the cooking device described above.

Those skilled in the art can understand that all or part of the functions of the various methods in the above embodiments can be implemented by hardware or by computer programs. When all or part of the functions in the above embodiments are implemented by computer programs, the program can be stored in a computer-readable storage medium, and the storage medium can comprise: read-only memory, random access memory, magnetic disk, optical disk, hard disk, etc., and the above functions are implemented by executing the program through a computer. For example, the program is stored in the memory of the device, and when the program in the memory is executed by the processor, all or part of the above functions can be implemented. In addition, when all or part of the functions in the above embodiments are implemented by computer programs, the program can also be stored in a storage medium such as a server, another computer, a magnetic disk, an optical disk, a flash disk, or a mobile hard disk, saved to the memory of a local device by downloading or copying, or the system of the local device is version-updated. When the program in the memory is executed by the processor, all or part of the functions in the above embodiments can be implemented.

The present application has been described using specific examples, which are only used to help understand the present application and are not used to limit the present application. For those skilled in the art to which the present application belongs, several simple deductions, modifications, or substitutions can also be made according to the idea of the present application.

## Claims

1. An air fryer, comprising:
a cooking body comprising a housing and a cooking pot body, the housing is configured to enclose and form a cooking cavity, and the cooking pot body is configured to carry food; the cooking pot body has a handle for drawably defining in the cooking cavity;
the cooking pot body divides the cooking cavity into the first cooking area located on one side of the cooking pot body and the second cooking area located on the other side of the cooking pot body;
charaterized in that a first heating unit having a power input terminal; the first heating unit is in an on state when its power input terminal is connected to power to heat the food on the cooking pot body from the first cooking area, and the first heating unit is in an off state when its power input terminal is disconnected from power to stop heating;
the first heating unit heats the first cooking area;
a second heating unit having a power input terminal; the second heating unit is in an on state when its power input terminal is connected to power to heat the food on the cooking pot body from the second cooking area, and the second heating unit is in an off state when its power input terminal is disconnected from power to stop heating the second cooking area;
a first driving circuit having a control terminal, a power terminal, and a driving terminal, the power terminal of the first driving circuit is configured to connect to power, and the driving terminal is connected to the power input terminal of the first heating unit; the first driving circuit is in a conduction state when a first conduction signal is input to its control terminal, so that its power terminal and driving terminal are conducted to drive the first heating unit to be in an on state, and the first driving circuit is in a cut-off state when a first cut-off signal is input to its control terminal, so that its power terminal and driving terminal are disconnected to drive the first heating unit to be in an off state;
a second driving circuit having a control terminal, a power terminal, and a driving terminal, the power terminal of the second driving circuit is configured to connect to power, and the driving terminal is connected to the power input terminal of the second heating unit; the second driving circuit is in a conduction state when a second conduction signal is input to its control terminal, so that its power terminal and driving terminal are conducted to drive the second heating unit to be in an on state, and the second driving circuit is in a cut-off state when a second cut-off signal is input to its control terminal, so that its power terminal and driving terminal are disconnected to drive the second heating unit to be in an off state.

2. The air fryer of claim 1, further comprising:
a first temperature sensing module defined in the first cooking area and configured to sense a temperature of the first cooking area and output a first cooking area temperature signal representing the temperature;
a second temperature sensing module defined in the second cooking area and configured to sense a temperature of the second cooking area and output a second cooking area temperature signal representing the temperature.

3. The air fryer of claim 2, charaterized in that the first cooking area temperature signal comprises a first temperature signal when the temperature of the first cooking area is less than a first threshold temperature, and comprises a second temperature signal when the temperature of the first cooking area is greater than a second threshold temperature, the first temperature signal is used to generate the first conduction signal, and the second temperature signal is used to generate the first cut-off signal; and/or,
the second cooking area temperature signal comprises a third temperature signal when the temperature of the second cooking area is less than a third threshold temperature, and comprises a fourth temperature signal when the temperature of the second cooking area is greater than a fourth threshold temperature, the third temperature signal is used to generate the second conduction signal, and the fourth temperature signal is used to generate the second cut-off signal.

4. The air fryer of claim 3, charaterized in that the first threshold temperature is the same as or different from the second threshold temperature; and/or, the second threshold temperature is the same as or different from the third threshold temperature; and/or, the first threshold temperature is different from the third threshold temperature; and/or, the second threshold temperature is different from the fourth threshold temperature.

5. The air fryer of claim 1, charaterized in that the first heating unit is capable of heating at a first power, the second heating unit is capable of heating at a second power, and a total power of the first power and the second power is greater than a preset limit power.

6. The air fryer of claim 1, charaterized in that the first driving circuit comprises a first switching transistor and a first relay; the first switching transistor has a first pole, a second pole, and a control pole, the first relay has a contact side and a coil side, the first pole of the first switching transistor is grounded, the control pole is configured to input the first conduction signal or the first cut-off signal, the second pole is connected in series with the coil side of the first relay, one end of the contact side of the first relay is configured to connect to the power input terminal of the first heating unit, and the other end is configured to connect to power.

7. The air fryer of claim 1, charaterized in that the second driving circuit comprises a second switching transistor and a second relay; the second switching transistor has a first pole, a second pole, and a control pole, the second relay has a contact side and a coil side, the first pole of the second switching transistor is grounded, the control pole is configured to input the second conduction signal or the second cut-off signal, the second pole is connected in series with the coil side of the second relay, one end of the contact side of the second relay is configured to connect to the power input terminal of the second heating unit, and the other end is configured to connect to power.

8. The cooking device of claim 1, charaterized in that the first heating unit comprises a fan member and a first heating member, the first heating member is configured to generate heat, and the fan member is configured to drive gas heated by the first heating member to flow to heat the first cooking area.

9. The air fryer of claim 1, charaterized in that the second heating unit comprises a second heating member, and the second heating member is configured to generate heat to heat the second cooking area.

10. A cooking device, comprising:
a cooking body having a first cooking area and a second cooking area, the first cooking area is different from the second cooking area;
charaterized in that a first heating unit having a power input terminal; the first heating unit is in an on state when its power input terminal is connected to power to heat food on the cooking pot body from the first cooking area, and the first heating unit is in an off state when its power input terminal is disconnected from power to stop heating;
the first heating unit heats the first cooking area; a second heating unit having a power input terminal;
the second heating unit is in an on state when its power input terminal is connected to power to heat food on the cooking pot body from the second cooking area, and the second heating unit is in an off state when its power input terminal is disconnected from power to stop heating the second cooking area;
a first driving circuit having a control terminal, a power terminal, and a driving terminal, the power terminal of the first driving circuit is configured to connect to power, and the driving terminal is connected to the power input terminal of the first heating unit; the first driving circuit is in a conduction state when a first conduction signal is input to its control terminal, so that its power terminal and driving terminal are conducted to drive the first heating unit to be in an on state, and the first driving circuit is in a cut-off state when a first cut-off signal is input to its control terminal, so that its power terminal and driving terminal are disconnected to drive the first heating unit to be in an off state;
a second driving circuit having a control terminal, a power terminal, and a driving terminal, the power terminal of the second driving circuit is configured to connect to power, and the driving terminal is connected to the power input terminal of the second heating unit; the second driving circuit is in a conduction state when a second conduction signal is input to its control terminal, so that its power terminal and driving terminal are conducted to drive the second heating unit to be in an on state, and the second driving circuit is in a cut-off state when a second cut-off signal is input to its control terminal, so that its power terminal and driving terminal are disconnected to drive the second heating unit to be in an off state.

11. The air fryer of claim 10, further comprising:
a first temperature sensing module defined in the first cooking area and configured to sense a temperature of the first cooking area and output a first cooking area temperature signal representing the temperature;
a second temperature sensing module defined in the second cooking area and configured to sense a temperature of the second cooking area and output a second cooking area temperature signal representing the temperature.

12. The air fryer of claim 11, charaterized in that the first cooking area temperature signal comprises a first temperature signal when the temperature of the first cooking area is less than a first threshold temperature, and comprises a second temperature signal when the temperature of the first cooking area is greater than a second threshold temperature, the first temperature signal is used to generate the first conduction signal, and the second temperature signal is used to generate the first cut-off signal; and/or,
the second cooking area temperature signal comprises a third temperature signal when the temperature of the second cooking area is less than a third threshold temperature, and comprises a fourth temperature signal when the temperature of the second cooking area is greater than a fourth threshold temperature, the third temperature signal is used to generate the second conduction signal, and the fourth temperature signal is used to generate the second cut-off signal.

13. The air fryer of claim 12, charaterized in that the first threshold temperature is the same as or different from the second threshold temperature; and/or, the second threshold temperature is the same as or different from the third threshold temperature; and/or, the first threshold temperature is different from the third threshold temperature; and/or, the second threshold temperature is different from the fourth threshold temperature.

14. The air fryer of claim 10, charaterized in that the first heating unit is capable of heating at a first power, the second heating unit is capable of heating at a second power, and a total power of the first power and the second power is greater than a preset limit power.

15. A cooking device, comprising:
a cooking body having a first cooking area and a second cooking area, the first cooking area is different from the second cooking area;
a first heating unit defined in the first cooking area;
a second heating unit defined in the second cooking area;
charaterized in that a control unit configured to:
determine a priority relationship between the first heating unit and the second heating unit;
obtain respective preset conditions for turning on and turning off the first heating unit and the second heating unit to independently control turning on and turning off of the first heating unit and the second heating unit, respectively;
control a high-priority heating unit to perform heating and stop heating of a low-priority heating unit, when a preset condition corresponding to turning on a high-priority heating unit is satisfied; and control the high-priority heating unit to stop heating to complete one heating cycle of the high-priority heating unit and enter a non-heating cycle of the high-priority heating unit, when a preset condition corresponding to turning off the high-priority heating unit is satisfied; the high-priority heating unit is the first heating unit and the low-priority heating unit is the second heating unit, or the high-priority heating unit is the second heating unit and the low-priority heating unit is the first heating unit; and
control the low-priority heating unit to perform heating, during the non-heating cycle and when a preset condition corresponding to turning on the low-priority heating unit is satisfied; and control the low-priority heating unit to stop heating, when a preset condition corresponding to turning off the low-priority heating unit is satisfied.
